# FASCICULE DE BREVET EUROPEEN

(11) **EP 3 645 922 B1**
(45) Date de publication et mention de la délivrance du brevet: **10.04.2024**
(21) Numéro de dépôt: 18749444.8
(22) Date de dépôt: 22.06.2018
(51) Int. Cl.: F16K 49/00, F16K 27/02, F01P 3/14, F02M 26/73, F16K 27/12

(54) **ENSEMBLE COMPRENANT UNE VANNE DE RÉGULATION DE DÉBIT D'UN GAZ ASSEMBLÉE A UN RÉCEPTACLE**
ANORDNUNG MIT EINEM AN EINEN BEHÄLTER MONTIERTEN GASSTROMREGELVENTIL
ASSEMBLY COMPRISING A GAS FLOW CONTROL VALVE ATTACHED TO A CONTAINER

(30) Priorité: 27.06.2017 FR 1755885
(43) Date de publication de la demande: 06.05.2020
(73) Titulaire: Valeo Systèmes de Contrôle Moteur, 95892 Cergy - Pontoise (FR)
(72) Inventeur: DE COLIGNY, Adeline, 95892 Cergy Pontoise (FR); GERBOT, Maxime, 95892 Cergy Pontoise (FR); RIBERA, Frédéric, 95892 Cergy Pontoise (FR); AQUA, Sébastien, 95892 Cergy Pontoise (FR)
(74) Mandataire: Valeo Powertrain Systems
(86) Numéro de dépôt international: PCT/FR2018/051520
(87) Numéro de publication internationale: WO 2019/002731

(56) Documents cités:
- EP-A2- 1 355 057
- CN-U- 205 744 197
- FR-A1- 3 041 693
- JP-A- H1 089 160
- US-A1- 2003 172 971
- US-A1- 2009 256 094
- US-A1- 2012 167 862
- US-A1- 2016 103 455
- US-A1- 2017 074 216

## Description

L'invention concerne un ensemble comprenant une vanne de régulation de débit d'un gaz et un réceptacle.

En particulier, le domaine de la présente invention est celui des équipements pour l'alimentation de moteur thermique, notamment de véhicule automobile, par exemple les actionneurs ou vannes doseuses qui participent au fonctionnement des moteurs thermiques et arrangés dans un circuit d'air du moteur thermique. Au sens de l'invention, on désigne par « circuit d'air de moteur thermique », le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (« EGR » en anglais).

Une telle vanne est donc parcourue par des gaz qui, même s'ils sont parfois refroidis avant de traverser la vanne, sont à des températures très élevées. Il convient en conséquence de refroidir ladite vanne ou au moins un élément la composant afin de les maintenir dans une gamme de température assurant un fonctionnement optimum.

Il est connu en ce sens d'utiliser un dispositif externe à la vanne, tel qu'un réceptacle, comprenant un conduit de refroidissement dans lequel un liquide de refroidissement circule de sorte à refroidir la vanne, notamment une paroi externe de la vanne.

Néanmoins, dans un tel dispositif, il n'y a pas de contact direct entre le liquide de refroidissement et la vanne, ce qui a pour conséquence que l'échange de chaleur entre le liquide de refroidissement et la vanne reste limité.

En outre, avec un tel dispositif, la distance entre le liquide de refroidissement et les éléments agencés à l'intérieur de la vanne qui nécessitent d'être refroidis est élevée. De ce fait, la qualité du refroidissement de ces éléments est limitée.

EP 1 355 057 divulgue un ensemble selon le préambule de la revendication 1.

Il existe donc un besoin d'améliorer le refroidissement de la vanne.

Ainsi, l'invention propose de fournir une vanne assemblée à un réceptacle permettant de remédier à ce problème.

A cet effet, l'invention a pour objet un ensemble selon la revendication 1.

Avantageusement, la cavité de la vanne selon l'invention permet de maximiser la surface de refroidissement autour du tronçon cylindrique du corps de vanne, et ainsi un refroidissement efficace des éléments agencés à l'intérieur du tronçon cylindrique du corps de vanne. En effet, la cavité ménagée dans le tronçon cylindrique permet la présence d'un liquide de refroidissement à proximité du tronçon cylindrique, et donc à proximité des éléments agencés dans le tronçon cylindrique, ce qui a pour conséquence une amélioration du refroidissement de la vanne.

Selon un premier mode de réalisation, l'obturateur est une soupape mobile en translation entre la position d'ouverture et la position de fermeture.

Selon un deuxième mode de réalisation, l'obturateur est un volet mobile en rotation entre la position d'ouverture et la position de fermeture.

La vanne de régulation de débit d'un gaz selon l'invention, notamment selon le premier ou le deuxième mode de de réalisation, peut également comprendre une ou plusieurs des caractéristiques ci-dessous, considérées individuellement ou selon toutes les combinaisons techniquement possibles :
- la cavité ouverte s'étend sur une plage angulaire de 360° autour de l'axe longitudinal du tronçon cylindrique ; et /ou
- la vanne comprend une platine de fixation s'étendant transversalement à l'axe longitudinal destinée à être fixée au corps de réceptacle lorsque la vanne est assemblée au réceptacle ; et /ou
- au moins une nervure de renfort s'étend depuis une paroi de la cavité ouverte selon l'axe longitudinal ; et /ou
- deux nervures de renfort s'étendent depuis une paroi de la cavité ouverte selon l'axe longitudinal, les deux nervures de renfort étant disposées de façon symétrique par rapport à l'axe longitudinal ; et /ou
- le tronçon cylindrique délimite un conduit de circulation du gaz, la vanne comprenant :
   - un obturateur mobile entre une position d'ouverture permettant le passage du gaz dans le conduit et une position de fermeture empêchant le passage du gaz dans le conduit,
   - un organe d'entraînement s'étendant selon l'axe longitudinal et sur lequel est fixé l'obturateur,
   la dimension selon une direction transversale à l'axe longitudinal entre l'organe d'entrainement et une paroi délimitant le fond de la cavité ouverte est inférieure ou égale à 10 mm, de préférence inférieure ou égale à 5 mm, et plus préférentiellement inférieure ou égale à 2,5 mm ; et /ou
- la vanne comprend un organe de commande de l'organe d'entrainement configuré pour commander sélectivement l'ouverture et la fermeture du conduit de circulation du gaz par l'obturateur ; et /ou
- le corps de vanne est réalisé en matériau métallique, par exemple en aluminium ou en acier ; et /ou
- le conduit de circulation du gaz est disposé axialement entre la cavité ouverte et une extrémité axiale du tronçon cylindrique ; et /ou
- la vanne est du type vanne de recirculation des gaz d'échappement, notamment du type haute pression ; et /ou
- la vanne est une vanne doseuse des gaz d'admission de moteurs.

L'invention concerne un ensemble, notamment pour moteur thermique, comportant :
- un réceptacle comprenant un corps de réceptacle de forme cylindrique, et
- une vanne régulation de débit d'un gaz selon l'invention,
le corps de vanne au moins partiellement reçu dans le corps de réceptacle lorsque la vanne et le réceptacle sont assemblés l'un à l'autre, la cavité fermée par le couvercle formant au moins en partie le conduit de refroidissement.

Avantageusement, l'ensemble selon l'invention permet un refroidissement efficace de la vanne.

L'ensemble selon l'invention peut également comprendre une ou plusieurs des caractéristiques ci-dessous, considérées individuellement ou selon toutes les combinaisons techniquement possibles :
- la vanne comprend une platine de fixation s'étendant transversalement à l'axe longitudinal fixée au corps de réceptacle lorsque la vanne est assemblée au réceptacle ; et /ou
- l'ensemble comprend un premier joint d'étanchéité arrangé entre la platine de fixation de la vanne et le corps de réceptacle ; et /ou
- la platine de fixation comporte une rainure conformée pour recevoir au moins en partie le premier joint d'étanchéité ; et /ou
- le premier joint d'étanchéité est réalisé en matériau métallique et recouvre au moins en partie la surface de la platine de fixation ; et /ou
- le premier joint d'étanchéité comporte un joint torique ; et /ou
- l'ensemble comprend un deuxième joint d'étanchéité arrangé entre la cavité et le couvercle ; et /ou
- le deuxième joint d'étanchéité comporte un joint torique ; et /ou
- le conduit de refroidissement est agencé axialement entre la platine de fixation et le deuxième joint d'étanchéité ; et /ou
- le conduit de circulation du gaz est disposé axialement entre le conduit de refroidissement et une extrémité axiale du tronçon cylindrique ; et /ou
- le conduit de refroidissement comprend une portion d'entrée du liquide de refroidissement et une portion de sortie du liquide de refroidissement, au moins une partie du conduit de refroidissement s'étendant entre les portions d'entrée et de sortie du liquide de refroidissement, les portions d'entrée et de sortie du liquide de refroidissement s'étendent selon le même axe transversal par rapport à l'axe longitudinal ; et /ou
- le conduit de refroidissement a une forme générale de U agencée autour de l'axe longitudinal ; et /ou
- le conduit de refroidissement comprend une première portion configurée pour transporter le liquide de refroidissement selon un sens et une direction par rapport à l'axe longitudinal et une deuxième portion configurée pour transporter le liquide de refroidissement selon le sens opposé et avec la même direction par rapport à l'axe longitudinal ; et /ou
- le corps de réceptacle est réalisé en matériau métallique, par exemple en aluminium ou en acier ; et /ou
- le liquide de refroidissement comprend de l'eau additionnée d'antigel, de préférence du glycol ; et /ou
- le réceptacle est un répartiteur d'admission du moteur thermique ; et /ou
- le réceptacle est une culasse du moteur thermique ; et /ou
- le réceptacle est un support de vanne indépendant du répartiteur d'admission et de la culasse du moteur thermique ; et /ou
- le conduit de refroidissement est en communication avec un circuit de refroidissement du moteur thermique.

D'autres caractéristiques et avantages de la présente invention apparaitront à la lecture de la description et des figures suivantes :
- la figure 1 est une vue en perspective d'une vanne de régulation de débit d'un gaz selon l'invention,
- la figure 2 est une vue en coupe de la vanne de régulation de débit d'un gaz de la figure 1,
- la figure 3 est une vue en perspective d'un ensemble selon l'invention,
- la figure 4 est une vue en coupe de l'ensemble de la figure 3, et
- les figures 5, 6 et 7 sont des vues de dessus d'un ensemble selon des modes de réalisation de l'invention.

Il est à noter que ces dessins n'ont d'autre but que d'illustrer le texte de la description et ne constituent en aucune sorte une limitation de la portée de l'invention.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

L'invention a pour objet un ensemble comprenant une vanne de régulation de débit d'un gaz pour un véhicule automobile.

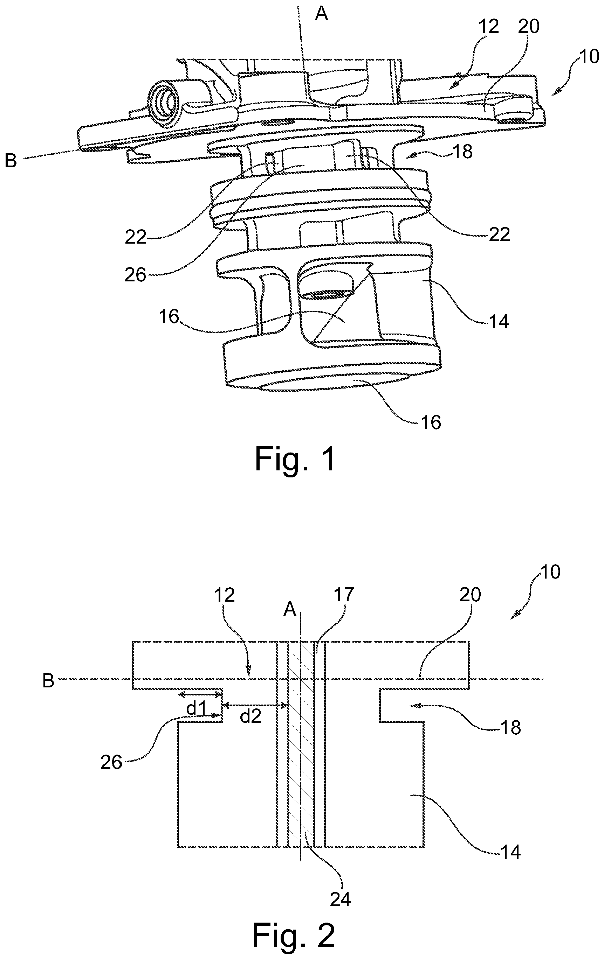

Les figures 1 et 2 illustrent une telle vanne 10 de régulation de débit d'un gaz configurée pour régler le débit de gaz d'échappement recirculés à l'admission d'un moteur.

La vanne de recirculation des gaz d'échappement peut être du type « haute pression », c'est-à-dire que les gaz d'échappement sont recirculés entre un point du circuit d'échappement situé en amont de la turbine d'un turbocompresseur, et un point du circuit d'admission du moteur situé en aval du compresseur.

La vanne 10 de régulation de débit d'un gaz est assemblée à un réceptacle.

La vanne 10 comprend un corps de vanne 12 comprenant un tronçon cylindrique 14 s'étendant selon un axe longitudinal noté A.

Le tronçon cylindrique 14 délimite un conduit 16 de circulation du gaz, notamment visible sur la figure 1. En particulier, le tronçon cylindrique 14 loge le dispositif de guidage 17 de l'organe d'entrainement 24 de la soupape. Le guidage peut être réalisé par un guide 17 inséré dans le corps. En variante, l'organe d'entrainement de la soupape peut coulisser directement dans un alésage réalisé dans le corps de vanne 12.

Le tronçon cylindrique 14 est au moins partiellement reçu dans un corps de réceptacle du réceptacle lorsque la vanne est assemblée au réceptacle.

Le corps de vanne 12 peut être réalisé en matériau métallique, par exemple en acier. De préférence, le corps de vanne 12 est réalisé en aluminium ou en alliage d'aluminium.

La vanne 10 peut comprendre un organe de régulation fluidique (non représenté), par exemple un obturateur, de préférence une soupape, mobile entre deux positions extrêmes. Dans le cas d'une vanne à soupape, l'obturateur est mobile en translation entre les deux positions extrêmes. Dans le cas d'une vanne à volet, l'obturateur peut être mobile en rotation entre les deux positions extrêmes.

Une des positions extrêmes de l'obturateur correspond à une position, dite position d'ouverture, dans laquelle le conduit 16 de la vanne 10 est totalement ouvert et permet de laisser passer les gaz d'échappement, et l'autre position extrême de l'obturateur correspond à une position, dire position de fermeture, dans laquelle le conduit 16 de la vanne 10 est totalement fermé bloquant ainsi le passage des gaz. Autrement dit, l'obturateur est mobile entre une position d'ouverture de la vanne permettant le passage du gaz dans le conduit 16 et une position de fermeture de la vanne empêchant le passage du gaz dans le conduit 16.

La vanne 10 peut comprendre un organe d'entrainement 24, notamment représenté sur la figure 2, par exemple un arbre ou une tige, s'étendant selon l'axe longitudinal A et sur lequel est fixé l'obturateur. En particulier, le tronçon cylindrique 14 loge l'organe d'entrainement 24 supportant l'obturateur.

La vanne 10 peut comprendre un organe de commande (non représenté) de l'organe d'entrainement 24 configuré pour commander sélectivement l'ouverture et la fermeture du conduit 16 de circulation du gaz par l'obturateur. Plus précisément, dans le cas d'une vanne à soupape, l'organe d'entrainement 24 est mis en mouvement de translation, entraînant l'obturateur, par l'organe de commande. Dans le cas d'une vanne à volet, l'organe d'entrainement 24 est mis en mouvement de rotation, entraînant l'obturateur, par l'organe de commande.

La vanne 10 peut comprendre un capteur de position (non représenté) destiné à détecter la position de l'obturateur. Par exemple, dans le cas d'une vanne à soupape, le capteur de position est un capteur de position linéaire, et dans le cas d'une vanne à volet, le capteur de position est un capteur de position angulaire.

La vanne 10 comprend une cavité ouverte 18 ménagée dans le tronçon cylindrique 14. La cavité ouverte 18 s'étend sur une plage angulaire supérieure ou égale à 180° autour de l'axe longitudinal A du tronçon cylindrique 14. La cavité ouverte 18 est fermée par une paroi du corps de réceptacle formant couvercle de la cavité ouverte lorsque la vanne est assemblée au réceptacle.

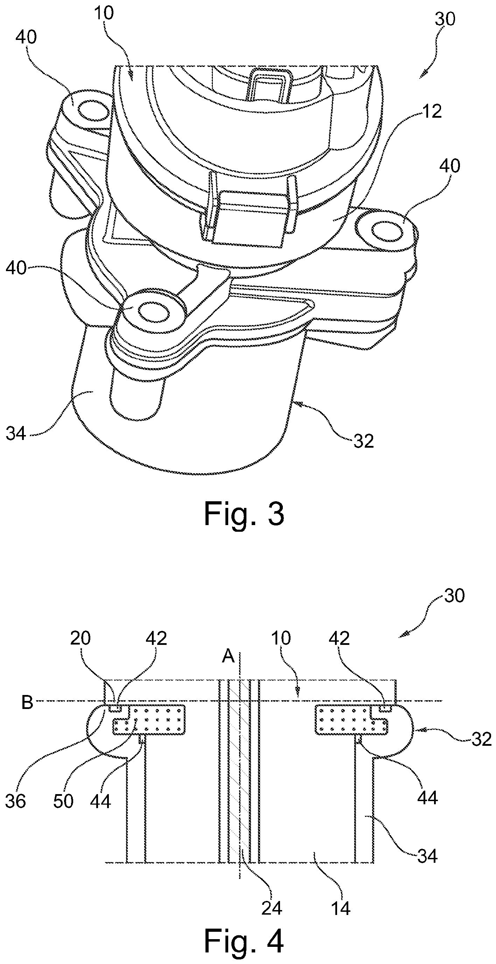

Lorsque la vanne 10 est assemblée au réceptacle, la cavité 18 est fermée par la paroi du réceptacle, comme représenté sur la figure 4, de sorte à former un conduit de refroidissement arrangé et configuré pour transporter un liquide de refroidissement destiné à refroidir la vanne 10.

De façon avantageuse, la cavité 18 de la vanne 10 permet de maximiser la surface de refroidissement autour du tronçon cylindrique 14 du corps de vanne 12. En particulier, la cavité 18 ménagée dans le tronçon cylindrique 14 permet la présence de liquide de refroidissement à proximité de l'organe d'entrainement 24, ce qui permet un refroidissement efficace de l'organe d'entrainement 24.

De préférence, la cavité ouverte 18 s'étend sur une plage angulaire supérieure ou égale à 270°, et plus préférentiellement sur une plage angulaire de 360°, autour de l'axe longitudinal A du tronçon cylindrique 14. Le conduit de refroidissement s'étendant sur une plage angulaire de 360° autour de l'organe d'entrainement 24 permet avantageusement un refroidissement tout autour du tronçon cylindrique 14, ce qui augmente l'efficacité du refroidissement de la vanne.

La dimension de la cavité ouverte 18 selon une direction transversale à l'axe longitudinal A, notée d1 sur la figure 2, peut être supérieure ou égale à 10 mm, et notamment supérieure ou égale à 15 mm.

Le conduit 16 de circulation du gaz peut être disposé axialement entre la cavité ouverte 18 et une extrémité axiale du tronçon cylindrique 14, comme représenté sur la figure 1.

La dimension selon une direction transversale à l'axe longitudinal A, notée d2 sur la figure 2, entre l'organe d'entrainement 24 et une paroi 26 délimitant le fond de la cavité ouverte 18 peut être inférieure ou égale à 10 mm. Autrement dit, l'organe d'entrainement ayant une forme cylindrique, la distance d2 entre une paroi de la forme cylindrique de l'organe d'entrainement 24 et le fond de la cavité ouverte 18 du tronçon cylindrique 12 peut être inférieure ou égale à 10 mm. De préférence, la distance d2 est inférieure ou égale à 5 mm, et plus préférentiellement inférieure ou égale à 4 mm.

De façon avantageuse, la distance d2 est minimisée afin d'optimiser le refroidissement de l'organe d'entrainement. En effet, plus la distance entre le conduit de refroidissement, et donc entre le fond de la cavité ouverte, et l'organe d'entrainement est réduite, plus le conduit de refroidissement est agencé à proximité de l'organe d'entrainement, et par conséquent plus la qualité du refroidissement de l'organe d'entraînement, et donc de la vanne, est élevée. L'amélioration du refroidissement permet de réduire les contraintes thermiques sur les composants les plus fragiles de la vanne. La fiabilité est ainsi améliorée. Il est également possible d'éviter l'emploi de matériaux spécialement adaptés aux hautes températures, qui augmentent le prix de revient de la vanne.

Au moins une nervure de renfort 22 peut s'étendre depuis une paroi de la cavité ouverte 18 selon l'axe longitudinal A. Par exemple, sur la figure 1, deux nervures de renfort 22 s'étendent depuis une paroi de la cavité ouverte 18 selon l'axe longitudinal A, les deux nervures de renfort 22 étant disposées de façon symétrique par rapport à l'axe longitudinal A. Une nervure de renfort permet avantageusement de renforcer la portion du tronçon cylindrique 14 dans lequel la cavité ouverte 18 est ménagée.

La vanne 10 peut comprendre une platine de fixation 20 s'étendant transversalement à l'axe longitudinal A, par exemple selon l'axe B tel que représenté sur les figures 1 et 2. La platine de fixation 20 est destinée à être fixée au corps de réceptacle lorsque la vanne 10 est assemblée au réceptacle.

Les figures 3 et 4 illustrent un ensemble 30 selon l'invention, notamment pour moteur thermique, comportant un réceptacle 32 et une vanne 10 de régulation de débit d'un gaz telle que décrite précédemment.

Notamment, le réceptacle 32 peut être un répartiteur d'admission du moteur thermique ou une culasse du moteur thermique. En variante, le réceptacle peut être un support de vanne indépendant du répartiteur d'admission et de la culasse du moteur thermique. Le réceptacle 32 comporte un corps de réceptacle 34 adapté pour recevoir la vanne 10. Le corps de réceptacle 34 peut être réalisé en matériau métallique, par exemple en aluminium ou en acier. Le corps de réceptacle 34 est de forme cylindrique s'étendant selon l'axe longitudinal A.

La vanne 10 et le réceptacle 32 sont configurés pour être assemblés l'un avec l'autre de manière fixe. En particulier, le corps de réceptacle 34 est configuré pour recevoir au moins partiellement la vanne 10, et notamment le corps de vanne 12, en vue de son assemblage sur le réceptacle 32. Par exemple, sur la figure 3, le tronçon cylindrique du corps de vanne 12 est reçu dans le corps de réceptacle 34.

Le réceptacle 32 peut comporter un plateau 36 s'étendant transversalement à l'axe longitudinal A, notamment selon l'axe B comme représenté sur la figure 4. Le plateau 36 et la platine de fixation 20 de la vanne 10 sont configurés pour maintenir fixement la vanne assemblée au réceptacle. Comme illustré sur la figure 3, la vanne 10 peut être fixée au réceptacle 32 par un ou plusieurs moyens de fixation 40, par exemple trois vis de fixation.

En particulier, la cavité 18 est fermée par le réceptacle, comme représenté sur la figure 4, de sorte que l'ensemble forme au moins en partie un conduit de refroidissement 50. Autrement dit, le conduit de refroidissement 50 est réalisé partiellement dans le corps de réceptacle 34 et partiellement dans le corps de vanne 12. Le conduit de refroidissement 50 est arrangé et configuré pour transporter un liquide de refroidissement destiné à refroidir la vanne lorsque la vanne 10, et plus particulièrement le tronçon cylindrique 14 du corps de vanne 12, lorsque la vanne 10 est assemblée au réceptacle 32. Par exemple, le liquide de refroidissement comporte de l'eau additionnée d'antigel, de préférence du glycol.

Le conduit 16 de circulation du gaz est disposé axialement entre le conduit de refroidissement 50 et une extrémité axiale du tronçon cylindrique 14, comme représenté sur la figure 1.

L'ensemble 30 peut comprendre un premier joint d'étanchéité 42 arrangé entre la platine de fixation 20 de la vanne 10 et le corps de réceptacle 34. Le premier joint d'étanchéité 42 permet d'assurer l'étanchéité de la platine de fixation 20 sur le plateau 36 pour éviter des fuites éventuelles du liquide de refroidissement. Le premier joint d'étanchéité 42 peut comporter un joint torique. Le premier joint d'étanchéité 42 peut être réalisé en matériau métallique.

La platine de fixation 20 peut comporter une rainure conformée pour recevoir au moins en partie le premier joint d'étanchéité 42. Alternativement, comme représenté sur la figure 4, le premier joint d'étanchéité 42 peut recouvrir au moins en partie la surface de la platine de fixation 20.

L'ensemble 30 peut comprendre un deuxième joint d'étanchéité 44 arrangé entre la cavité de la vanne 10 et le couvercle du réceptacle 32. Le deuxième joint d'étanchéité 44 permet d'assurer l'étanchéité du conduit de refroidissement au niveau de la jonction entre la cavité 18 de la vanne et le réceptacle 32 pour éviter des fuites éventuelles du liquide de refroidissement. Le deuxième joint d'étanchéité 44 peut comporter un joint torique.

Comme représenté sur la figure 4, le corps de réceptacle 34 peut comporter une rainure conformée pour recevoir au moins en partie le deuxième joint d'étanchéité 44.

Le conduit de refroidissement 50 peut être agencé axialement entre la platine de fixation 20 et le deuxième joint d'étanchéité 44. Plus précisément, le conduit de refroidissement 50 peut être agencé axialement entre le premier joint d'étanchéité 42 et le deuxième joint d'étanchéité 44.

Le conduit de refroidissement 50 est arrangé autour de l'organe d'entrainement 24 et s'étend sur une plage angulaire supérieure ou égale à 180° autour de l'organe d'entrainement 24 supportant la soupape afin de refroidir efficacement le corps de vanne 12 susceptible d'être échauffé par les gaz d'échappement du moteur thermique.

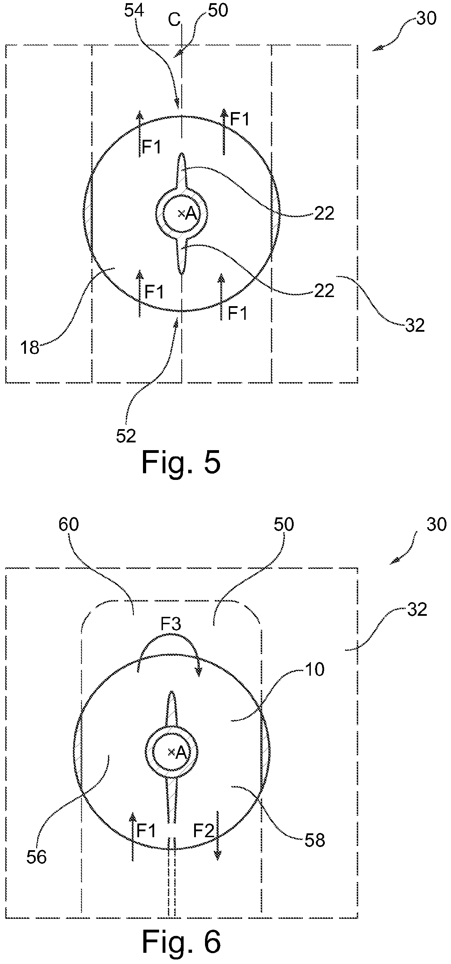

Comme représenté sur la figure 5, le conduit de refroidissement 50 peut comprendre une portion d'entrée 52 du liquide de refroidissement et une portion de sortie 54 du liquide de refroidissement. Entre la portion d'entrée 52 et la portion de sortie 54 du liquide de refroidissement s'étend une partie du conduit de refroidissement 50. Les portions d'entrée 52 et de sortie 54 du liquide de refroidissement s'étendent selon le même axe transversal, noté C sur la figure 5, par rapport à l'axe longitudinal A. Par exemple, le liquide de refroidissement peut s'écouler dans le sens des flèches F1 représentées sur la figure 5. La cavité ouverte 18 s'étend sur une plage angulaire de 360° autour de l'axe longitudinal A du tronçon cylindrique 14.

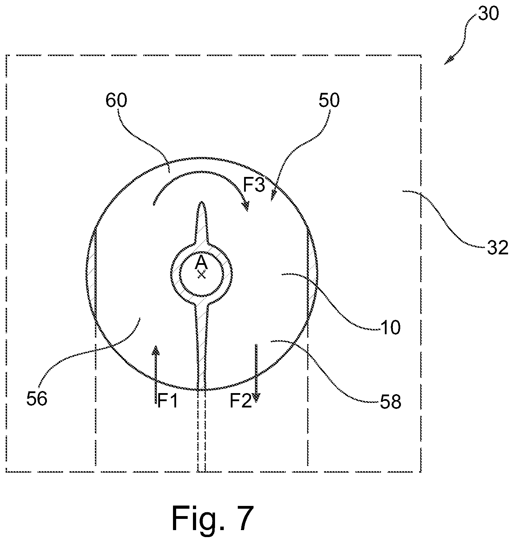

Comme représenté sur les figures 6 et 7, le conduit de refroidissement 50 peut avoir une forme générale de U agencée autour de l'axe longitudinal A. Le conduit de refroidissement 50 comprend une première portion 56 configurée pour transporter le liquide de refroidissement selon un sens et une direction par rapport à l'axe longitudinal A et une deuxième portion 58 configurée pour transporter le liquide de refroidissement selon le sens opposé et avec la même direction par rapport à l'axe longitudinal A. Par exemple, le liquide de refroidissement peut s'écouler dans le sens de la flèche F1 représentée sur la figure 6 dans la première portion 56 et dans le sens de la flèche F2 dans la deuxième portion 58. Entre les première et deuxième portions 56, 58, le conduit de refroidissement comprend une troisième portion 60 en forme de U. Le liquide de refroidissement peut s'écouler dans le sens de la flèche F3 représentée sur la figure 6 dans la troisième portion 60.

Sur la figure 6, la troisième portion 60 s'étend dans le réceptacle 32 de sorte que le changement de sens du liquide de refroidissement entre la première portion 56 et la deuxième portion 58 s'effectue hors de la vanne 10.

Sur la figure 7, la troisième portion 60 s'étend dans la vanne 10 de sorte que le changement de sens du liquide de refroidissement entre la première portion 56 et la deuxième portion 58 s'effectue dans la vanne 10.

En outre, le conduit de refroidissement 50 est de préférence en communication avec un circuit de refroidissement du moteur thermique.

La vanne de régulation du débit d'un gaz a été décrite dans le cadre d'une vanne doseuse des gaz d'admission de moteurs. Bien entendu, l'invention n'est nullement limitée aux modes de réalisation décrits et illustrés, qui n'ont été donnés qu'à titre d'exemples. Au contraire, d'autres applications de la vanne de régulation du débit d'un gaz conforme à l'invention sont également possibles sans sortir du cadre de l'invention qui est défini par les revendications en annexe.

## Revendications

1. Ensemble comprenant une vanne (10) de régulation de débit d'un gaz et un réceptacle (32), la vanne étant assemblée au réceptacle (32), le réceptacle comprenant un corps de réceptacle (34) de forme cylindrique, la vanne comprenant :
- un corps de vanne (12) comprenant un tronçon cylindrique (14) s'étendant selon un axe longitudinal (A), et
- une cavité ouverte (18) ménagée dans le tronçon cylindrique (14) et s'étendant sur une plage angulaire supérieure ou égale à 180° autour de l'axe longitudinal (A) du tronçon cylindrique (14), la cavité ouverte (18) étant fermée par une paroi du corps de réceptacle (34) formant couvercle de la cavité ouverte (18) pour former un conduit de refroidissement (50) arrangé et configuré pour transporter un liquide de refroidissement destiné à refroidir la vanne lorsque la vanne est assemblée au réceptacle (32),
l'ensemble étant **caractérisé en ce que**:
- le tronçon cylindrique (14) est au moins partiellement reçu dans le corps de réceptacle (34), et
- la vanne comprend
- au moins une nervure de renfort (22) s'étendant depuis une paroi de la cavité ouverte (18) selon l'axe longitudinal (A).

2. Ensemble selon la revendication précédente, dans lequel la cavité ouverte (18) s'étend sur une plage angulaire de 360° autour de l'axe longitudinal (A) du tronçon cylindrique (14).

3. Ensemble selon l'une des revendications précédentes, comprenant une platine de fixation (20) s'étendant transversalement à l'axe longitudinal (A) fixée au corps de réceptacle (34).

4. Ensemble selon l'une des revendications précédentes, dans lequel le tronçon cylindrique (14) délimite un conduit (16) de circulation du gaz, la vanne comprenant :
- un obturateur mobile entre une position d'ouverture permettant le passage du gaz dans le conduit (16) et une position de fermeture empêchant le passage du gaz dans le conduit (16),
- un organe d'entrainement (24) s'étendant selon l'axe longitudinal (A) et sur lequel est fixé l'obturateur,
la dimension selon une direction transversale à l'axe longitudinal (A) entre l'organe d'entraînement (24) et une paroi délimitant le fond de la cavité ouverte (18) est inférieure ou égale à 10 mm, de préférence inférieure ou égale à 5 mm, et plus préférentiellement inférieure ou égale à 2,5 mm.

5. Ensemble selon la revendication précédente, dans lequel l'obturateur est une soupape mobile en translation entre la position d'ouverture et la position de fermeture.

6. Ensemble selon l'une des revendications 4 ou 5, dans lequel le conduit (16) de circulation du gaz est disposé axialement entre la cavité ouverte (18) et une extrémité axiale du tronçon cylindrique (14).

7. Ensemble selon l'une des revendications précédentes, dans lequel la vanne est du type vanne de recirculation des gaz d'échappement, notamment du type haute pression.

8. Ensemble selon une des revendications 3 à 7, comprenant un deuxième joint d'étanchéité (44) arrangé entre la cavité et le couvercle, et dans lequel le conduit de refroidissement (50) est agencé axialement entre la platine de fixation (20) et le deuxième joint d'étanchéité (44).

9. Ensemble selon la revendication 8, dans lequel le conduit de refroidissement (50) comprend une portion d'entrée (52) du liquide de refroidissement et une portion de sortie (54) du liquide de refroidissement, au moins une partie du conduit de refroidissement (50) s'étendant entre les portions d'entrée (52) et de sortie (54) du liquide de refroidissement, les portions d'entrée (52) et de sortie (54) du liquide de refroidissement s'étendent selon le même axe transversal par rapport à l'axe longitudinal (A).

10. Ensemble selon une des revendications précédentes, dans lequel le conduit de refroidissement (50) est en communication avec un circuit de refroidissement du moteur thermique.

## Patentansprüche

1. Anordnung, welche ein Gasdurchflussregelventil (10) und einen Behälter (32) umfasst, wobei das Ventil mit dem Behälter (32) zusammengebaut ist, wobei der Behälter einen Behälterkörper (34) von zylindrischer Form umfasst, wobei das Ventil umfasst:
- einen Ventilkörper (12), der einen zylindrischen Abschnitt (14) umfasst, der sich entlang einer Längsachse (A) erstreckt, und
- einen offenen Hohlraum (18), der im zylindrischen Abschnitt (14) ausgebildet ist und sich über einen Winkelbereich, der größer oder gleich 180° ist, um die Längsachse (A) des zylindrischen Abschnitts (14) erstreckt, wobei der offene Hohlraum (18) durch eine Wand des Behälterkörpers (34) verschlossen ist, die eine Abdeckung des offenen Hohlraums (18) bildet, um einen Kühlkanal (50) zu bilden, der dazu angeordnet und ausgelegt ist, eine Kühlflüssigkeit zu transportieren, die dazu bestimmt ist, das Ventil zu kühlen, wenn das Ventil mit dem Behälter (32) zusammengebaut ist, wobei die Anordnung **dadurch gekennzeichnet ist, dass**:
- der zylindrische Abschnitt (14) wenigstens teilweise im Behälterkörper (34) aufgenommen ist, und
- das Ventil mindestens eine Verstärkungsrippe (22) umfasst, die sich von einer Wand des offenen Hohlraums (18) aus entlang der Längsachse (A) erstreckt.

2. Anordnung nach dem vorhergehenden Anspruch, wobei sich der offene Hohlraum (18) über einen Winkelbereich von 360° um die Längsachse (A) des zylindrischen Abschnitts (14) erstreckt.

3. Anordnung nach einem der vorhergehenden Ansprüche, welche eine sich quer zur Längsachse(A) erstreckende Befestigungsplatte (20) umfasst, die am Behälterkörper (34) befestigt ist.

4. Anordnung nach einem der vorhergehenden Ansprüche, wobei der zylindrische Abschnitt (14) einen Strömungskanal (16) des Gases begrenzt, wobei das Ventil umfasst:
- eine Verschlussvorrichtung, die zwischen einer Öffnungsposition, die den Durchfluss des Gases im Kanal (16) ermöglicht, und einer Schließposition, die den Durchfluss des Gases im Kanal (16) verhindert, beweglich ist,
- ein Antriebsorgan (24), das sich entlang der Längsachse (A) erstreckt und an dem die Verschlussvorrichtung befestigt ist,
wobei die Abmessung, in einer Richtung quer zur Längsachse (A), zwischen dem Antriebsorgan (24) und einer Wand, die den Boden des offenen Hohlraums (18) begrenzt, kleiner oder gleich 10 mm, vorzugsweise kleiner oder gleich 5 mm und stärker bevorzugt kleiner oder gleich 2,5 mm ist.

5. Anordnung nach dem vorhergehenden Anspruch, wobei die Verschlussvorrichtung ein Ventilelement ist, das zwischen der Öffnungsposition und der Schließposition translatorisch beweglich ist.

6. Anordnung nach einem der Ansprüche 4 oder 5, wobei der Strömungskanal (16) des Gases axial zwischen dem offenen Hohlraum (18) und einem axialen Ende des zylindrischen Abschnitts (14) angeordnet ist.

7. Anordnung nach einem der vorhergehenden Ansprüche, wobei das Ventil vom Typ eines Abgasrückführungsventils ist, insbesondere vom Hochdrucktyp.

8. Anordnung nach einem der Ansprüche 3 bis 7, welche eine zweite Dichtung (44) umfasst, die zwischen dem Hohlraum und der Abdeckung angeordnet ist, und wobei der Kühlkanal (50) axial zwischen der Befestigungsplatte (20) und der zweiten Dichtung (44) angeordnet ist.

9. Anordnung nach Anspruch 8, wobei der Kühlkanal (50) einen Eintrittsabschnitt (52) der Kühlflüssigkeit und einen Austrittsabschnitt (54) der Kühlflüssigkeit umfasst, wobei sich mindestens ein Teil des Kühlkanals (50) zwischen dem Eintritts- (52) und dem Austrittsabschnitt (54) der Kühlflüssigkeit erstreckt, wobei sich der Eintritts- (52) und der Austrittsabschnitt (54) der Kühlflüssigkeit entlang derselben quer zur Längsachse (A) verlaufenden Achse erstrecken.

10. Anordnung nach einem der vorhergehenden Ansprüche, wobei der Kühlkanal (50) mit einem Kühlkreislauf des Verbrennungsmotors in Verbindung steht.

## Claims

1. Assembly comprising a gas flow regulating valve (10) and a receptacle (32), the valve being assembled with the receptacle (32), the receptacle comprising a receptacle body (34) in the form of a cylinder, the valve comprising:
- a valve body (12) comprising a cylindrical section (14) extending along a longitudinal axis (A), and
- an open cavity (18) that is formed in the cylindrical section (14) and extends over an angular range greater than or equal to 180° about the longitudinal axis (A) of the cylindrical section (14), the open cavity (18) being closed by a wall of the receptacle body (34) that forms a cover for the open cavity (18) in order to form a cooling duct (50) that is arranged and configured to transport a cooling liquid intended to cool the valve when the valve is assembled with the receptacle (32), the assembly being **characterized in that**:
- the cylindrical section (14) is at least partially received in the receptacle body (34), and
- the valve comprises at least one reinforcing rib (22) extending from a wall of the open cavity (18) along the longitudinal axis (A).

2. Assembly according to the preceding claim, wherein the open cavity (18) extends over an angular range of 360° about the longitudinal axis (A) of the cylindrical section (14).

3. Assembly according to either of the preceding claims, comprising a mounting plate (20) that extends transversely to the longitudinal axis (A) and is fastened to the receptacle body (34).

4. Assembly according to one of the preceding claims, wherein the cylindrical section (14) delimits a duct (16) for circulating the gas, the valve comprising:
- a shutter that can move between an open position that allows the gas to pass through the duct (16) and a closed position that prevents the gas from passing through the duct (16),
- a drive member (24) that extends along the longitudinal axis (A) and to which the shutter is fastened,
the dimension along a direction transverse to the longitudinal axis (A) between the drive member (24) and a wall delimiting the bottom of the open cavity (18) is smaller than or equal to 10 mm, preferably smaller than or equal to 5 mm, and more preferentially smaller than or equal to 2.5 mm.

5. Assembly according to the preceding claim, wherein the shutter is a plug that can move in translation between the open position and the closed position.

6. Assembly according to either of Claims 4 and 5, wherein the duct (16) for circulating the gas is arranged axially between the open cavity (18) and an axial end of the cylindrical section (14).

7. Assembly according to one of the preceding claims, wherein the valve is of the exhaust gas recirculation valve type, in particular of the high-pressure EGR valve type.

8. Assembly according to one of Claims 3 to 7, comprising a second gasket (44) arranged between the cavity and the cover, and wherein the cooling duct (50) is arranged axially between the mounting plate (20) and the second gasket (44).

9. Assembly according to Claim 8, wherein the cooling duct (50) comprises a cooling liquid inlet portion (52) and a cooling liquid outlet portion (54), at least part of the cooling duct (50) extending between the cooling liquid inlet (52) and outlet (54) portions, the cooling liquid inlet (52) and outlet (54) portions extending along the same axis, which is transverse with respect to the longitudinal axis (A).

10. Assembly according to one of the preceding claims, wherein the cooling duct (50) is in communication with a cooling circuit of the internal combustion engine.
